# EUROPEAN PATENT APPLICATION

(11) **EP 2 469 486 A1**
(43) Date of publication of application: **27.06.2012**
(21) Application number: 10306501.7
(22) Date of filing: 23.12.2010
(51) Int. Cl.: G07F 7/10

(54) **Method for managing a personalization of an application**

(71) Applicant: Gemalto KK, Tokyo (JP)
(72) Inventor: Yonezawa, Masao, 92190 Meudon (FR)
(74) Representative: Cassagne, Philippe M.J.

(57) **Abstract**

The invention relates to a method for managing a personalization of an application adapted to be executed on a smart card, said method comprising steps of loading said application, installing said application according to javacard specifications, characterized in that it comprises creating a personalized CAP file with personalized so as the application is personalized before the step of loading.

## Description

### FIELD OF THE INVENTION

The present invention relates generally to cards such as JavaCard and more specifically to a method for managing a personalization of an application.

### BACKGROUND OF THE INVENTION

As generally known, an applet or application goes through various states before being able to be used by a final user. The applet is first loaded onto the Javacard in a loading step, instantiated on the card in an installation step, and personalized in a personalized step.

EMV CPS (Common Personalization Specification) allows a standard method to personalization.

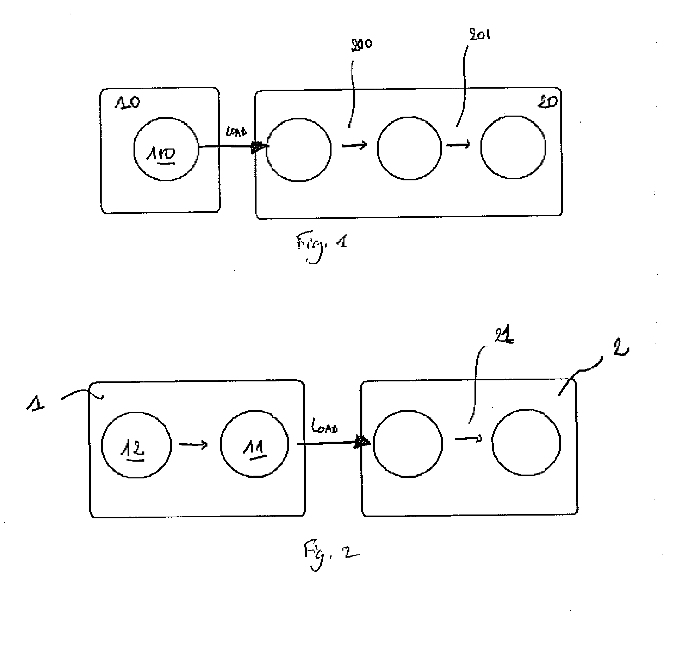

Shown in figure 1 is a method of the prior art for a traditional OTA downloading personalization. For such a method, an OTA server manages 10 a CAP file 110 of the applet. The OTA server has to manage personalization data and has to process personalization commands. The method comprises steps of processing a mutual authentication for example using a supplementary security domain (SSD), installing for loading, the loading, installing for installing, i.e. an instantiation with the command install (step 200), processing a mutual authentication with an installed applet or installing data for the personalization, i.e. a personalization step with the personalized commands (step 201) with Store Data command (in case of CPS) or Proprietary commands for personalization (in case of proprietary personalization).

Nevertheless, regarding security, the applet is responsible for person commands and this method still requires several APDU commands for the personalization step, as it is traditionally done. Furthermore there are applets which do not support CPS specification, which may cause an issue in an Over-The-Air scheme (proprietary command, not SCP02, etc...)

[It is then an object of the invention to provide a method for improving the personalization step.

Thereto, the present invention provides a method for managing a personalization of an application adapted to be executed on a smart card, said method comprising steps of loading said application, installing said application according to javacard specifications, characterized in that it comprises creating a personalized CAP file with personalized data so as the application is personalized before the step of loading.

According to another aspect of the invention, the method may comprise a Mutual authentication step between an over-the-air server and said smart card.

According to another aspect of the invention, the method may comprise processing the commands Install [for load], Load and Install [for install] for using the application, said application being already personalized.

Thanks to the invention, it is advantageously possible to allow OTA downloading for all application which does not support CPS.

The various aspects, features and advantages of the invention will become more fully apparent to those having ordinary skill in the art upon careful consideration of the following Detailed Description, given by way of example thereof, with the accompanying drawings described below:
**FIG.1** schematically shows a diagram a method for according to the prior art.
**FIG.2** schematically shows a diagram of an embodiment of the method of the invention.

### DETAILED DESCRIPTION

The present invention may be understood according to the detailed description provided herein.

Shown in Figure 2 is a remote secure device 2, such as a smart card 2. The smart card 2 is adapted to process Java Applets as defined in the Java Card Platform Specification.

A remote server 1, such as an Over-The-Air (OTA) server, manages an export file 12 for the library and a source code for a part that shall be personalized of an applet adapted to be installed onto the remote device 2.

The export file 12 comprises parts that are not necessary to be personalized.

The OTA server 1 creates a specific CAP file for a user from the source code and the export file with personalization data, i.e. the OTA server makes a personalized CAP file 11 of the applet with personalized data. The CAP file comprises data such as the Cardholder name at this stage.

Once prepared in the OTA server 1, the personalized CAP file 11 is loaded onto the smart card 2 after the mutual authentication with a card.

The method according to the invention comprises establishing a mutual authentication between the OTA server and the smart card 2.

After the mutual authentication step, the method comprises classical steps of Installing [for load], Loading, and Installing [for Install], i.e. the instantiation with the command Installing [for Install] 21, as defined in Java Card Specification.

It is not necessary to proceed to the classical personalization step as the applet is at this stage already ready to use. The smart card 2 is already personalized when the instance is made.

Thanks to this method the CAP file is personalized OTA before any loading. No personalization command is necessary. The sole commands which are used are the Load/Install commands. Security is only the OS responsibility.

Transmitted data for the personalization step and in total are smaller since there are no personalization commands, and since it is not necessary to implement and send personalization APDU commands.

The invention advantageously allows downloading for all applications which for example do not support CPS.

## Claims

1. Method for managing a personalization of an application adapted to be executed on a smart card, said method comprising steps of loading said application, installing said application according to javacard specifications, **characterized in that** it comprises creating a personalized CAP file with personalized so as the application is personalized before the step of loading.

2. Method according to claim 1, **characterized in that** it comprises a Mutual authentication step between an over-the-air server and said smart card.

3. Method according to claim 2, **characterized in that** it comprises processing the commands Install [for load], Load and Install [for install] for using the application, said application being already personalized.
